## Europäisches Patentamt

### European Patent Office

### Office européen des brevets

(11) Publication number: **0 261 946**
**A1**

(12)
# EUROPEAN PATENT APPLICATION

(21) Application number: **87308406.5**

(22) Date of filing: **22.09.87**

(51) Int. Cl.⁴: **E 03 F 5/14**
**B 02 C 18/40, B 01 D 33/10,**
**B 01 D 29/48**

(30) Priority: **23.09.86 GB 8622875**

(43) Date of publication of application:
**30.03.88 Bulletin 88/13**

(84) Designated Contracting States: **DE FR GB IT NL**

(71) Applicant: **Mitchell Cotts Mining Equipment Limited**
**Lyne Hill Industrial Estate**
**Penkridge Staffordshire ST19 5LS (GB)**

(72) Inventor: **Clough, George Francis Gilbert**
**Allmeadows Wincle**
**Macclesfield Cheshire SK11 0QJ (GB)**

(74) Representative: **Lomas, Geoffrey Michael et al**
**BARKER, BRETTELL & DUNCAN 138 Hagley Road**
**Edgbaston**
**Birmingham B16 9PW (GB)**

(54) A screening assembly.

(57) The assembly is designed to remove large items from sewage or other waste flowing in a channel, such items being either removed or cut up and returned to the flow. A cylindrical screen (11) has its side wall (12) constructed from a series of helically formed bars (13), and the screen is normally supported with its axis inclined to the horizontal and partially immersed in sewage. Small items of sewage pass through the screen but large items are carried round on the outside of the screen to encounter a screen cleaning device (20) which advantageously consists of a series of cutting members. The screen (11), screen drive mechanism (9, 19), and screen cleaning device (20) are pivotable relative to a cradle (1) about pivot (7) to a raised position clear of the sewage when a catch (30) is released by a baffle (31) responsive to an excessive rise of sewage upstream of the baffle.

FIG.1.

FLOW

EP 0 261 946 A1

**Description**

## A SCREENING ASSEMBLY

This invention relates to a screening assembly for removing solids from a stream of fluid. The invention relates particularly, but not exclusively, to a sewage screening assembly.

Equipment used for the screening of sewage prior to treatment has changed little during recent years. At the same time labour costs have risen substantially and hence there has been a progressive reduction in the labour available for operation and maintenance. Many small works are not now continuously manned and the trend is towards lengthening the interval between visits of operating personnel. The screening operation is one of the main factors that will determine how far the interval may be extended.

The main methods of dealing with screenings are removal followed by burial, removal followed by disintegration and return to the flow, and screening combined with disintegration in-line, usually termed comminution. The methods involving cutting up the screenings and returning them to the flow have the advantage that there are no screenings as such to be dealt with, a singularly disagreeable task, the material being pumped away as part of the primary sludge. If the screenings are not cut up but are torn apart because the cutting edges are blunt, long fibres are formed which tend to ball up wherever there are vortices in the subsequent sewage flow. This can produce blockages at various points, the clearing of which is as disagreeable a job as handling screenings.

One of the main problems is the handling of faeces, which are better not removed since they do not cause blockages. Another problem with existing equipment arises from the presence of grit which tends to deposit and interfere with the screen clearing mechanism at the bottom of its stroke.

The present invention stems from attempts to produce a screen to meet the following criteria:

1. The screen should be self-cleaning with provision for the screenings to be either cut and returned to the flow or conveyed out of the flow. Objects too large or too hard should be conveyed out in any case. Faeces should not be conveyed out in either case.

2. The device should require minimum maintenance and that which is necessary should be as simple as possible with minimum disruption of operation.

3. Installation in an existing works should be possible without incurring excessive cost.

According to one aspect of the invention a waste screening assembly for screening waste material conveyed in a fluid comprises a substantially cylindrical screen, a support for supporting the screen such that it can be arranged in a channel through which waste flows with the cylinder axis inclined to the horizontal and with the screen partially immersed in waste in the channel, drive means for rotating the screen about its axis, and means for cutting or removing material which does not flow through the screen side wall.

The waste material might be domestic refuse conveyed by a fluid such as air under pressure, but preferably the waste is sewage which flows through the channel.

According to a second aspect of the invention a sewage screening assembly comprises a substantially cylindrical screen, a support for supporting the screen such that it can be arranged in a sewage channel with the cylinder axis inclined to the horizontal and with the screen partially immersed in sewage in the channel, drive means for rotating the screen about its axis, and means for cutting or removing material which does not flow through the screen side wall.

Whilst it might be possible to construct the screen side wall from a series of longitudinal bars there are considerable advantages in constructing the screen from a series of helical bars.

The term "helical bar" will be used hereinafter, including the claims, to mean a bar which has been formed such that its longitudinal axis substantially follows a helix or a part of a helix.

The use of a helical bar has the effect that anything trapped by the bar is carried axially of the screen when it comes up against an abutment, due to the rotation of the screen.

The normal direction of rotation of the screen is preferably such that if anything trapped by the bar is prevented by an abutment from rotating with the screen then it will be carried in the upstream direction by the axial component of the force exerted by the bar.

Although it might be possible to use a single helical bar having several turns, this would most probably require an internal supporting spider intermediate the ends of the screen, and such a spider is undesirable because rags can collect on the spider.

Preferably, therefore, the screen side wall is made up of a plurality of such helical bars, the screen apertures being provided by the gap between adjacent helical bars, and most preferably the side wall comprises at least eight helical bars, the number of bars being selected to suit particular circumstances.

The helical bars are conveniently connected together only at their ends, preferably by welding to end rings or plates.

The use of several bars reduces the torsional load to which the individual bars are subjected under various circumstances, and thus the stress at the points of attachment between the bars and screen end plates. For example, when the screen is driven by an axial shaft, a jam between a non-rotating member and the screen can result in considerable force being applied to the bars, but the force can be shared between several bars.

The bars may be of any convenient section such as square, rectangular or trapezoidal.

It is preferably arranged that the flow is from the outside to the inside of the cylindrical wall.

The lower, open end of the screen is then preferably located immediately in front of a hole of substantially the same diameter in the lower part of a baffle which dams the channel, the purpose of the baffle being to compel the liquid to enter the screen.

The opposite end of the screen is preferably closed by a diaphragm which may either be fixed to the screen or alternatively be stationary, depending on the method used for rotating the screen. In the first case the screen is driven and is preferably supported at its closed end by an axial shaft with additional supporting rollers at the open end. In the second case the screen can be supported on and driven by two internal rollers which are rotated in synchronism by a geared drive from the drive means.

The rollers are preferably in the form of screws with a square or trapezoidal thread form, the pitch or the distance between adjacent spaces of the rollers being substantially the same as that between the bars of the cage so that the rollers mesh with the helical bars.

Solids unable to pass through the spaces between the bars are initially held against the bars by the flow and, as the cage rotates, are carried round to the upper region of the screen. In this region it is preferably arranged that the solids encounter one of a number of possible devices designed either to reduce the size of the solids or convey them out of the flow.

In the first category is a meshing screw of somewhat similar form to the supporting rollers previously mentioned except that in this case the hand of the thread is opposite to that of the screen. The diameter is established in a similar way with the difference that in this case the pitch angle of the meshing screw is made slightly smaller than that of the screen in order to provide a shearing action. The cut solids will return to the main flow.

Screenings which are too large or of a form which will not shear in this way, for example a block of wood, will be conveyed along the screen in an upstream direction and may be collected by suitable means or allowed to fall back into the flow upstream of the screen, size reduction being eventually achieved by repeated abrasion.

When a meshing screw is employed to cut the solids, the meshing screw is preferably resiliently biassed towards the screen so that it will move away from the screen in the event of an excessive load.

Other devices which could be used instead of or in addition to a meshing screw are a series of toothed discs also meshing with the screen, or a driven member somewhat similar in form to the cutting cylinder of a lawn mower and operating on the surface of the screen. Such devices would also preferably be resiliently biassed towards the screen.

Toothed discs may be used at various places in the apparatus to prevent accumulations of rags.

The conveyor used in the second category may be of screw, scraper or belt type, the screenings then being delivered either to a discharge point via a section which allows drainage of entrained water or to a separate cutting unit, disintegrator, prior to the return of the screenings to the upstream flow.

It is preferred to arrange the drive means such that in the event of the solids being of an amount or having characteristics such that the drive is overloaded, excessive motor current initiates a cycle in which the rotation of the cage is stopped and briefly reversed before continuing in a forward direction.

Sustained overload may be sensed by the temperature of the motor windings. In the case of an excessive rise in temperature the supply to the motor would be interrupted in the usual way.

The screen support is preferably arranged to permit the screen to be pivoted to a position in which it is substantially clear of the sewage in the channel, for maintenance purposes.

Preferably the screen drive means and the cutting/removing device or devices are arranged as a self-contained assembly which is pivotable with respect to the support, about a substantially horizontal axis.

In order to avoid a stoppage of the flow of sewage in the event of a failure in the drive means, it is preferably arranged that upon such failure the screen is allowed to pivot to the maintenance position. It may subsequently be lifted from the sewage in the channel.

Preferably said baffle is connected to a pressure responsive device which is arranged such that excessive pressure on the baffle, due to a rise in the level of sewage in the channel upstream of the baffle, causes operation of the pressure responsive device to permit the screen to lift or to be lifted.

By positioning the pivotal axis for the screen generally towards the upstream end of the screen it can be arranged that the force exerted on the screen by sewage in the channel will tend to lift the screen, and it is preferably arranged that in the event of excessive fluid pressure on the baffle, the baffle releases a catch permitting upward pivoting of the screen.

Whilst solids are then allowed to pass forwards in the channel, this solution is generally preferable in an emergency to an interruption of the flow, which would result in the discharge of untreated sewage via emergency overflows elsewhere in the sewer system.

According to a third aspect of this invention a screening assembly for screening waste material conveyed in a fluid passing through a channel comprises a substantially cylindrical screen adapted to be supported in the channel for rotation about the cylinder axis, and drive means for rotating the screen about its axis, the side wall of the screen being constructed from at least one helical bar.

By way of example only, two sewage screening assemblies in accordance with the invention will now be described with reference to the accompanying drawings in which:-

Figure 1 is a vertical cross-section of a first screening assembly with the screen shown in its operative position;

Figure 2 is a vertical cross-section, similar to Figure 1, of a second screening assembly; and

Figure 3 is an end view of the screening unit of the assembly of Figure 2, looking in the direction of the arrow A in Figure 2.

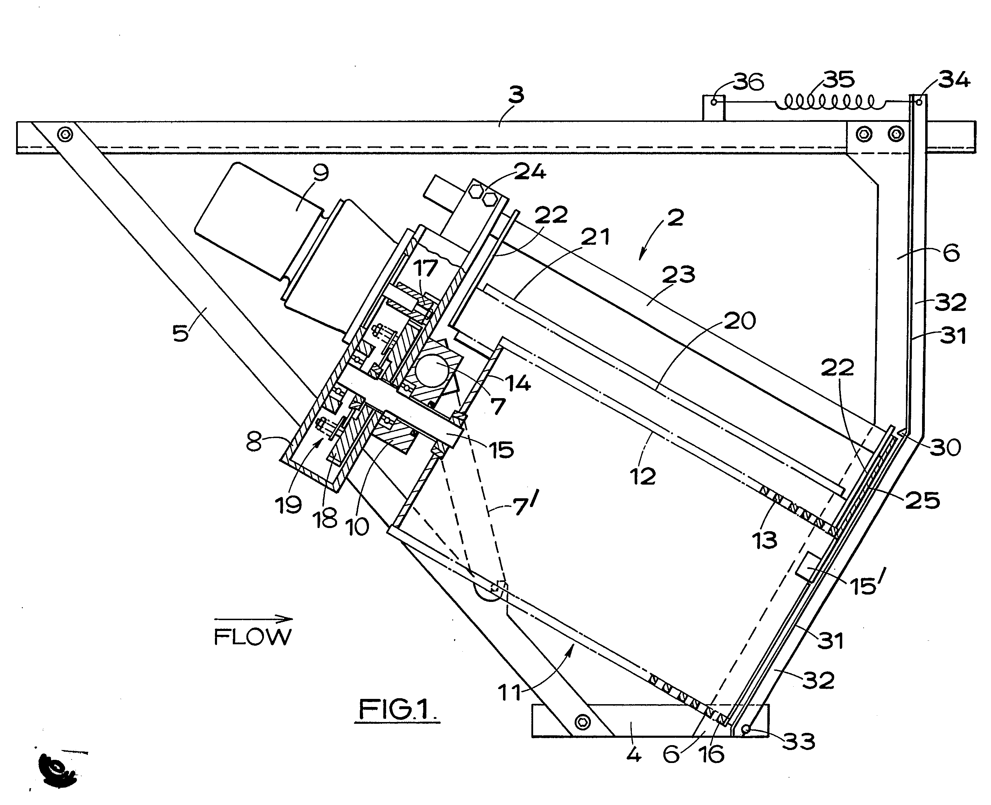

With reference to Figure 1 a cradle support 1 for pivotally supporting a self-contained screening unit 2 comprises a pair of transversely spaced-apart side frames, each comprising upper and lower frame members 3 and 4 respectively, an inclined upstream frame member 5 and a cranked downstream abutment plate 6. The screening unit 2 is rigidly fixed to a cross bar 7 which is pivotally supported at its opposite ends in brackets, not shown, on the side frames.

Screening unit 2 comprises a gear casing 8 on one side of which is mounted an electric drive motor 9 and on the other side a block 10 in which bar 7 is rigidly fixed.

A rotary cylindrical screen 11 comprises a cylindrical sidewall 12 constructed from eight helical bars 13 which are equally spaced apart in the axial direction. At the upstream, upper end of the screen 11 the bars are welded to a flat diaphragm plate 14 which is secured to gearbox output shaft 15, and at the downstream lower end of the screen 11 the bars are welded to an end ring 16.

Shaft 15 is driven from the motor by way of reduction gearing 17, 18 and a clutch 19 housed within gear casing 8. The downstream, lower end of the screen 11 is mounted on a pair of internal rollers 15', carried by a C-shaped plate 25 secured to a support rod 23.

The support framework is intended to be positioned in a sewage channel and secured there such that the lower portion of the screen 12 lies within the sewage. The level of sewage in the channel will vary with the flow. The maximum level under normal conditions will be such that more than half of the length of the top of the screen will be above the level of sewage.

A cleaning roller 20 is arranged to co-operate with the upper part of the screen wall 12, the roller 20 extending for more than the full length of screen 11, having an overhang 21 at the upstream end. The roller is pivotally carried by two arms 22 such that its axis is parallel to that of screen 11, the arms being pivotally carried by the support rod 23 which is secured at its upstream end in a bracket 24 on gear casing 8.

Roller 20 comprises one or more helical cutting members which mesh with the screen wall 12.

In order to prevent rags becoming wrapped around roller 20, a series of toothed discs may be provided which co-operate with the roller 20, the axes of the discs being substantially perpendicular to that of the screen.

The roller 20 may be driven if desired.

During normal use the screening unit 2 is held in the position shown with the axis of the screen 11 inclined at an angle of about 35° to the horizontal by a catch 30 which is carried by a cranked baffle plate 31. Baffle plate 31 is reinforced by a pair of cranked bars 32 which are pivoted at their lower ends on a pivot pin 33 carried by the frame members 4, the upper end 34 of one frame member being biassed rearwardly by an adjustable tension spring 35 anchored at 36 to one of the frame members 3. Spring 35 normally holds the baffle plate 31 in abutment with plates 6, such that the catch 30 retains the screen in the position shown in Figure 1.

The plate 31 is shaped to dam the sewage channel, and the lower part of plate 31 lies closely adjacent to the downstream end of the inclined screen 11, a circular aperture in the plate registering with that end of the screen 11.

Screen 11 is rotated continuously by motor 9 such that sewage material which does not pass between adjacent bars 13 is carried round with the bars until it engages with the cutting elements of roller 20. If the material is capable of being readily cut then the roller 20 will cut it into small pieces which will either pass between the bars 13 to enter the interior of the screen 11, or will fall back into the liquid beneath the screen 11 and will then pass through the screen wall 12 on its next approach to the screen.

Material which is not cut at all by the roller 12 will be carried along the roller 20 by the action of the helical bars 13 pushing against it, towards the upper end of roller 20. This material will eventually reach the overhanging portion 21 from which it may be removed by a belt conveyor if desired. Alternatively it may be allowed to fall back into the upstream sewage to go through further cycles of abrasion by the roller 20, until it has been made sufficiently small to pass through the screen 11.

In order to prevent a build up of material, such as rags, at the junctions between the bars 13 and plate 14, a toothed disc may be rotatably mounted for co-operation with the junctions as the screen rotates.

If the screen 11 should become blocked, the additional water pressure on the baffle plate 31 will pivot the plate 31 about pins 33 against the force of spring 35 to release catch 30 which normally holds the screen unit 2 in the operative position, so that the unit 2 can swing in a counter-clockwise manner to a position in which the axis of screen 11 is substantially horizontal, and the screen is substantially out of the sewage in the channel.

One or more levers 7' secured to the cross bar 7 can be used to pivot the screen 11 back to its operative position.

The clutch 19 is of the type which slips at a pre-set torque and is provided to limit the applied torque to the screen to that which can be sustained by a bar 13 in the event of a jam.

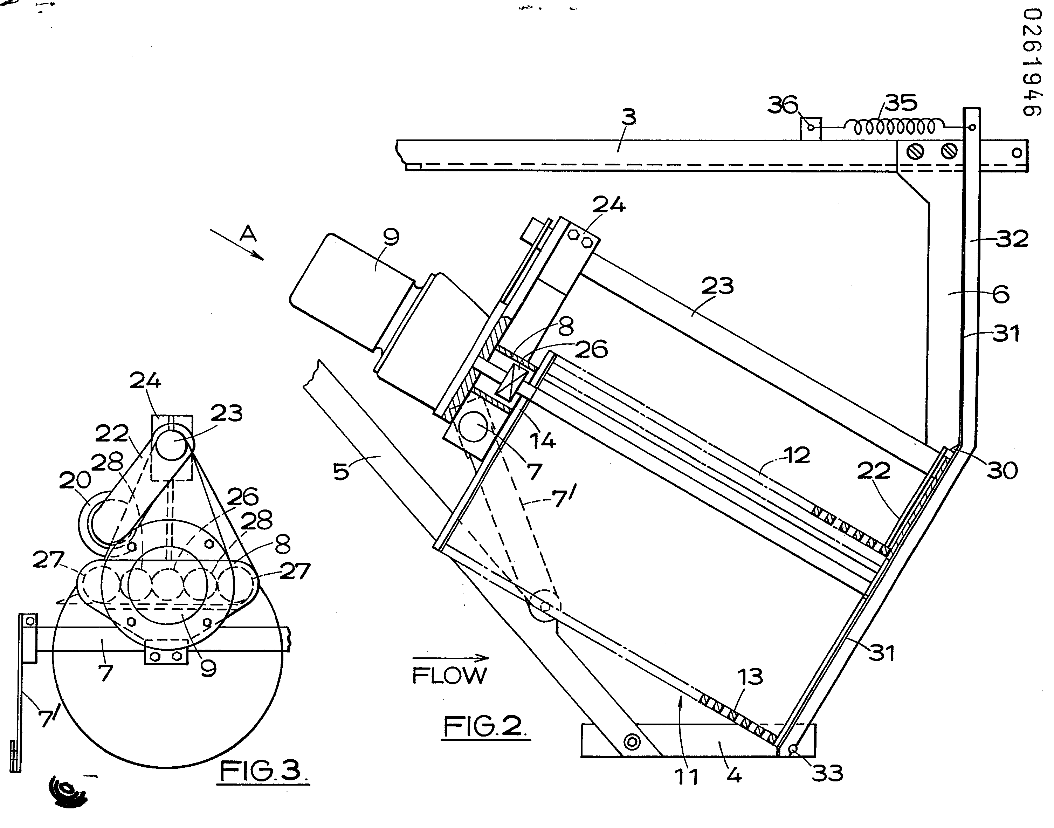

The assembly of Figures 2 and 3 is similar in many respects to that of Figure 1, and corresponding parts have been given corresponding reference numerals. The assembly differs from that of Figure 1 in the manner in which the screen 11 is supported for rotation and is driven.

In the construction of Figures 2 and 3 the diaphragm plate 14 is fixed to the gear casing 8, and the screen 11 is rotatably supported on a pair of internal rollers, preferably in the forms of screws with a square or trapezoidal thread form. The width of the channel forming the thread is such that in operation the bars of the cage may pass through them without undue friction. The hand of the screws is the same as that of the helices forming the bars of the screen, normally right hand, and the pitch angles at the respective pitch circle diameters are substantially the same. This is achieved by making the number of starts of the screws of the supporting rollers equal to the number of bars in the screen divided by the ratio of the respective pitch circle diameters. For example if the screen contains twelve bars and the rollers are in the form of two start screws their effective diameter will be 2/12th or one sixth of that of the cage.

The faces of the thread section of the supporting rollers may be inclined, i.e. of trapezoidal form if desired.

The internal rollers are driven simultaneously by gearing in gear case 8 comprising a primary gear 26, secondary gears 27 on the ends of the respective shafts of the internal support rollers, and transfer gears 28.

The use of internal support rollers to drive the screen 11 avoids the need for a clutch similar to the clutch 19 of Figure 1, since the support rollers can be sufficiently strong to withstand the maximum torque likely to be applied, and the frictional nature of the drive will limit the forces applied to the bars.

In a modification of the apparatus of Figures 2 and 3 the main support rollers could be constructed from a plurality of rings, but then it would be necessary to provide an auxiliary roller which meshes with the screen 11, and is driven to rotate the screen.

A modification of the apparatus described might be used for the removal of grass solids from sewage discharged from a storm overflow. The location of the overflow may be such that no electrical power is available, in which case it might be possible to use the flow of sewage to rotate the screen as by a waterwheel or an equivalent.

Whilst the apparatus has been described primarily in relation to the screening of sewage, a similar apparatus may be used for treating domestic refuse at a refuse treatment works. In some circumstances it is desirable for rags, cardboard etc. to be cut into small pieces prior to pelletising. The apparatus described might be used for this, the refuse being conveyed to the screen by a fluid, preferably air under pressure.

**Claims**

1. A waste screening assembly for screening waste material conveyed in a fluid passing through a channel comprising a substantially cylindrical screen (11), a support (1, 7) for supporting the screen in the channel for rotation about the cylinder axis, and drive means (9) for rotating the screen about its axis, characterised in that the support is adapted to support the screen with the axis of the screen inclined to the horizontal and with the screen partially immersed in waste in the channel, and by means (20) for cutting or removing material which does not flow through the screen side wall.

2. A screening assembly as claimed in Claim 1 adapted and intended for use in screening sewage.

3. A screening assembly as claimed in Claim 1 or Claim 2 in which the screen side wall is constructed from at least one helical bar (13), as hereinbefore defined.

4. A screening assembly as claimed in Claim 3 in which the side wall of the screen is made up of a plurality of such helical bars, the screen apertures being provided by the gap between adjacent helical bars.

5. A screening assembly as claimed in any of the preceding claims and installed in a channel through which the waste material flows, the flow being from the outside to the inside of the cylindrical side wall.

6. A screening assembly for use as claimed in Claim 5, the lower, open end of the screen being located immediately in front of a hole of substantially the same diameter in the lower part of a baffle (31) which is adapted to dam the channel, the baffle being so arranged as to compel the fluid to enter the screen.

7. A screening assembly as claimed in any of the preceding claims in which the upper end of the screen is closed by a diaphragm (14).

8. A screening assembly as claimed in Claim 7 in which the diaphragm is fixed to the screen and the screen is driven by an axial shaft (15) fixed to the diaphragm.

9. A screening assembly as claimed in Claim 7 which is supported on and driven by two internal rollers which are adapted to be rotated in synchronism by a geared drive (26, 27, 28) from the drive means (19).

10. A screening assembly as claimed in any of the preceding claims in which a screen cleaning device (20) is positioned in an upper region of the screen and is arranged to cut and/or remove from the screen solids which are unable to pass through the spaces between the bars and are carried round by the screen side wall to said upper region.

0261946

FIG.1.

FLOW

0261946

FIG.2.

FLOW

FIG.3.

European Patent Office

**EUROPEAN SEARCH REPORT**

Application Number

EP 87 30 8406

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | DE-C- 865 580 (GEIGER) <br> * Whole document * <br> --- | 1,2,7-10 | E 03 F 5/14 <br> B 02 C 18/40 <br> B 01 D 33/10 <br> B 01 D 29/48 |
| Y | EP-A-0 163 158 (HUBER) <br> * Pages 5,6; figure 1 * <br> --- | 1,2,7-10 | |
| A | DE-A-1 956 607 (CONDUX-WERK) <br> * Pages 1,2; claims; figures 1-4 * <br> --- | 1,2 | |
| A | FR-A-2 099 926 (STELLA-META FILTERS LTD) <br> * Figure 3 * <br> --- | 3,4 | |
| A | DE-B-1 060 801 (PASSAVANT-WERKE) <br> ----- | | |

| | | | | TECHNICAL FIELDS SEARCHED (Int. Cl.4) |
|---|---|---|---|---|
| | | | | E 03 F <br> B 02 C |

The present search report has been drawn up for all claims

| Place of search | Date of completion of the search | Examiner |
|---|---|---|
| THE HAGUE | 11-12-1987 | HANNAART J.P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P0401)